Europäisches Patentamt

European Patent Office

Office européen des brevets

(11) Publication number: **0 408 235 A2**

# EUROPEAN PATENT APPLICATION

(21) Application number: 90307244.5

(22) Date of filing: 03.07.90

(51) Int. Cl.5: **G01J 5/06**

(30) Priority: 08.07.89 GB 8915689

(43) Date of publication of application:
16.01.91 Bulletin 91/03

(84) Designated Contracting States:
BE DE FR IT

(71) Applicant: GEC-MARCONI LIMITED
The Grove Warren Lane
Stanmore Middlesex HA7 4LY(GB)

(72) Inventor: Smith, Brian Frederick
4 Navestock Close
Rayleigh, Essex(GB)

(74) Representative: Waters, Jeffrey et al
GEC Patent Department (Chelmsford Office)
GEC-Marconi Research Centre, West
Hanningfield Road
Great Baddow, Chelmsford, Essex CM2
8HN(GB)

(54) **Thermal imaging systems.**

(57) In a thermal imaging system for passive imaging of infra-red rays, a converging imaging cone is incident on a detector 2. To shield the detector from rays outside the imaging cone which would cause noise, a thin plate 10 is provided and, since the detector is cooled but the plate is not and therefore generates infrared radiation, the plate is formed with corner cube reflectors to reflect radiation emanating from the detector back onto itself. As compared with the conventional "cold shield" reflector which has a spherical reflecting surface, the use of a plate formed with corner cube reflectors makes the imaging system thinner in the axial direction in the region of the detector.

FIG 4

## THERMAL IMAGING SYSTEMS

This invention relates to thermal imaging, that is, imaging of thermally-emitted electromagnetic waves, generally infra-red waves.

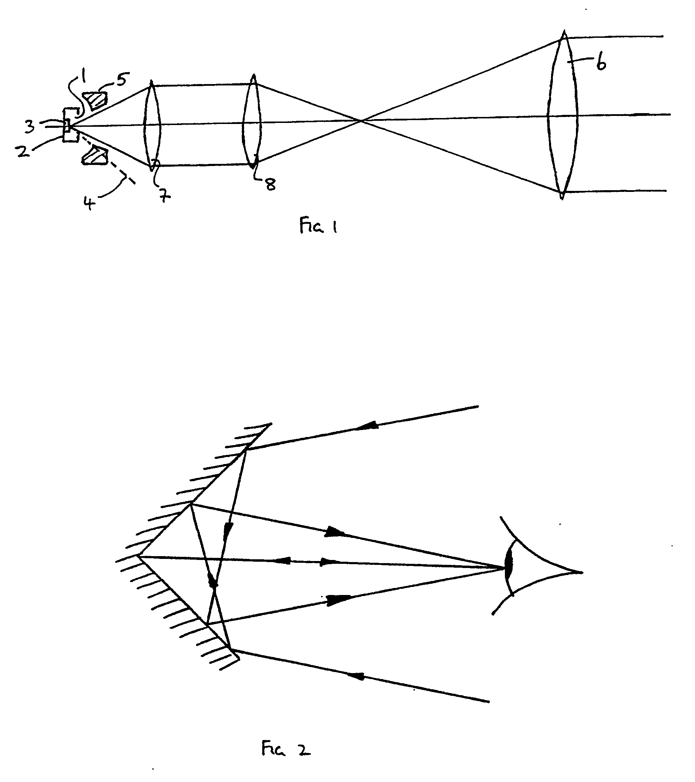

Thermal imagers are commonly used to view objects whose temperatures are close to ambient, perhaps differing from ambient by only 5°C. or less. This reduces the maximum possible signal-to-noise ratio to a value normally referred to as the background limit. However, in practice, even this value of signal-to-noise ratio would be reduced if radiation from outside the solid angle of the imaging beam is incident on the detector. Referring to Figure 1, it might at first be thought that noise from outside the imaging solid angle could be excluded by reducing the size of window 1 at the front of detector 2. However, this opening has to be wide enough to accept imaging cones directed to extreme parts of the detecting element 3, and is often wider than that and, as a proprietary item, cannot readily be modified.

It would not be possible to mask such rays as 4 with an iris outside the detector, because the iris would be at ambient temperature and would itself be a source of noise. To reduce the noise in the detector as far as possible, it is cooled, both element 3 and the remainder of the interior of the detector 2.

. The solution usually adopted to prevent rays such as 4 entering the detector is to use a shield 5 which has a spherical reflecting surface on the side facing the detector 2 in order to reflect rays emanating from the detector window 1, outside the solid angles of the imaging beam, back into the detector opening. Thus, instead of viewing a radiating iris, the detector opening simply views a cold surface with negligible emissions. The centre of curvature of the so-called "cold shield" is in the region of the detector window. The cold shield closely matches the envelope of the imaging beams.

The invention provides a thermal imaging system comprising a detector arranged to receive a converging imaging beam, reflecting means having an aperture which in use surrounds the converging imaging beam, the reflecting means being arranged to reflect rays emanating from the detector outside the solid angle of the imaging beam back onto the detector, the reflecting means comprising a plurality of corner reflectors.

The corner reflectors are axially much thinner than the spherical reflecting surface and are particularly useful in applications where space is limited close to the detector.

Such corner reflectors can be produced by moulding, for example injection moulding, in plastics material, and the surface can be metallised to form a reflecting surface.

The invention will now be described in detail with reference to the accompanying drawings, in which;

Figure 1 is an axial section of a known thermal imaging system.

Figure 2 is a ray diagram for a single corner reflector;

Figure 3 is an axial section of a part of a thermal imaging system according to the invention, the size of the detector being exaggerated for clarity;

Figure 4 is an enlarged view of part of the system shown in Figure 3.

Referring to Figure 1, the known thermal imaging system has an objective 6 for receiving infra-red rays from a scene to be imaged and lenses 7, 8 for imaging the beam onto a detecting element of the detector 2. A cold shield 5 has a spherical reflecting surface and reflects back onto the detector rays which emanate from the detector outside the solid angle of the imaging cone. The imaging system is scanned across the scene to be viewed by means of a scanner (not shown) positioned between lenses 7 and 8.

In accordance with the invention, the cold shield with spherical reflecting surface is replaced by a plurality of corner cube reflectors.

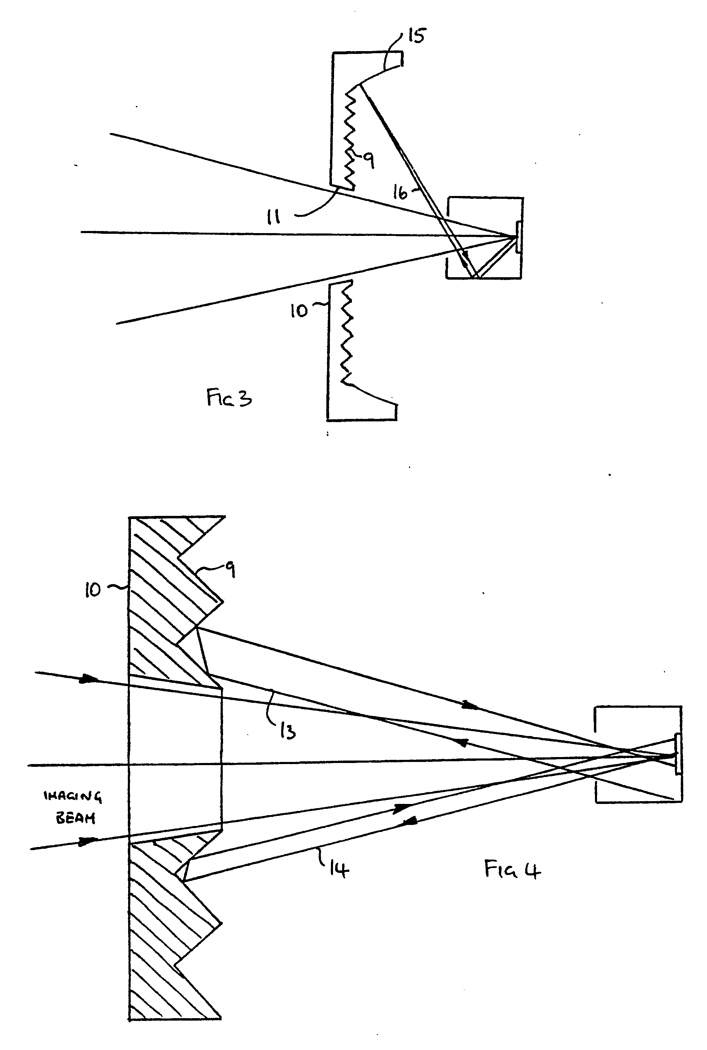

Referring to Figure 2, a corner cube is formed by three plane reflecting surfaces position orthogonally to each other and has the property of returning the ray travelling towards its apex precisely back along its own path. Rays incident on the cube, away from the apex are returned along a path parallel to their original direction but laterally shifted. The magnitude of this lateral shift is governed by the dimensions and the point of incidence on the cube. The cube behaves like a simple mirror except that the returned image is completely inverted. If many cubes are formed alongside each other, each will return small inverted images which appear adjacent to each other. This device therefore no longer behaves like a normal mirror but can effectively image a small object back onto itself.

Thus, referring to Figures 3 and 4, a large number of corner cube reflectors are formed in the surface of a thin flat plate 10, which has a central aperture 11 through which the converging imaging beam passes.

It will be seen in Figure 4, which shows the corner cube reflectors on an enlarged scale, that rays 13 and 14' which emanate from the detector outside the solid angle of the imaging beam are retroreflected by one of the corner reflectors back onto the detector.

Referring to Figure 3, the thin plate bearing the corner reflectors has a spherical region 15 surrounding it for the purpose of imaging back onto the detector those rays such as ray 16 which emanate from the detector at a large angle, because of multiple reflections from the walls of the detector.

It will be seen that the use of corner reflectors makes the detector thinner in the axial direction in the region of the detector. The corner reflectors can be simply and cheaply mass produced, for example by injection moulding of plastics material which may then be metallised on its surface.

Material for the construction of the corner cube reflection plate is readily available in the form of car and cycle reflectors.

## Claims

1. A thermal imaging system, comprising a detector arranged to receive a converging imaging beam, reflecting means having an aperture which in use surrounds the converging imaging beam, the reflecting means being arranged to reflect rays emanating from the detector outside the solid angle of the imaging beam back onto the detector, the reflecting means comprising a plurality of corner reflectors.

2. A thermal imaging system as claimed in claim 1, in which a spherical reflector surrounds the plurality of corner reflectors.

3. A thermal imaging system as claimed in claim 1 or claim 2, in which the corner reflectors are defined by moulded plastics material.

4. A thermal imaging system substantially as herein described with reference to the accompanying drawings.

Fig 1

Fig 2

Fig 3

IMAGING BEAM

Fig 4